# EUROPEAN PATENT APPLICATION

(11) **EP 0 906 942 A2**
(43) Date of publication of application: **07.04.1999**
(21) Application number: 98115796.9
(22) Date of filing: 21.08.1998
(51) Int. Cl.: C09D 5/44, C08G 59/58

(54) **Composition for cationic electrodeposition coating**

(30) Priority: 29.09.1997 JP 282496/97
(71) Applicant: Shinto Paint Co., Ltd., Amagasaki, Hyogo-ken (JP)
(72) Inventor: Nakashio, Masaaki, c/o Shinto Paint Co., Ltd., Amagasaki, Hyogo-ken (JP); Arakura, Shoichiro, c/o Shinto Paint Co., Ltd., Amagasaki, Hyogo-ken (JP)
(74) Representative: Harrison, Michael Charles

(57) **Abstract**

Disclosed herein is a cationic electrodeposition coating composition containing a cationic amine-modified epoxy resin (A) obtained by cationizing an amine-modified epoxy resin prepared by the reaction of amine with an epoxy resin which is obtained by the reaction of at least one dicarboxylic acid having a molecular weight of 90-200 with at least one diglycidyl ether of dihydric phenol.

## Description

### Background of the Invention

The present invention relates to a composition for cationic electrodeposition coating exhibiting an excellent rust-preventing property by containing a cationic amine-modified epoxy resin (A) which is capable of forming a chelate compound with a material metal.

As compared with air spraying and electrostatic spraying, an electrodeposition has a better throwing power and results in less environmental pollution when applied to materials having recessed areas such as automobiles and home electric appliances and, therefore, it has been widely put to practical use as a primer coating.

In conventional electrodeposition compositions, modified epoxy resin having amino groups in a molecule which is cationized is used as a basic resin while, as a crosslinking agent, blocked (poly)isocyanate prepared by the reaction of aromatic isocyanates such as tolylene diisocyanate and diphenylmethane diisocyanate, aliphatic (alicyclic) isocyanates such as hexamethylene diisocyanate and isophorone diisocyanate or polyisocyanates thereof with a blocking agent.

If necessary, common additives such as coloring pigments, body pigments, rust-preventing pigments, curing catalysts, antifoaming agents and solvents are further compounded therewith in optional proportions.

Under the recent trend in environmental regulation which is becoming severer, there has been a brisk demand for quality of coatings such as making lead or other heavy metals free, making the VOC low, making the heating loss low (making the generation of gas upon burning low), etc.

Especially with regard to making lead free, several nontoxic or less toxic rust-preventing pigments have been developed already but, when they are used for cationic electrodeposition coating, none of them at present affords good rust-preventing ability as compared with lead-containing coatings. Thus, it is quite difficult that the rust-preventing property which is the most important quality in electrodeposition coating is maintained the same as or is made better than that in the conventional products.

Under such circumstances, the present inventors have conducted an intensive investigation in cationic electrodeposition coating containing basically no pigments of a lead type and having the same or ever better rust-preventing property as compared with the conventional products, have developed a cationic amine-modified epoxy resin (A) which is capable of producing a chelate compound with a material metal and have found that the above-mentioned object can be achieved by using said resin.

### Brief Summary of the Invention

Thus, the present invention relates to a cationic electrodeposition coating composition containing a cationic amine-modified epoxy resin (A) obtained by cationizing an amine-modified epoxy resin prepared by the reaction of amine with an epoxy resin which is obtained by the reaction of at least one dicarboxylic acid having a molecular weight of 90-200 with at least one diglycidyl ether of dihydric phenol.

### Detailed Description of the Invention

The cationic amine-modified epoxy resin (A) of the present invention is an epoxy resin having preferably two epoxy groups in average per molecule and its epoxy equivalent is preferably 400-5,000 or, particularly preferably, 500-2,000.

To be more specific, examples of the dicarboxylic acid is that having active methylene chain such as malonic acid, succinic acid, glutaric acid, adipic acid, maleic acid and fumaric acid and that having active hydroxyl group to said methylene chain such as malic acid and tartaric acid although the present invention is not limited thereto but a mixture thereof may be used as well.

Examples of the diglycidyl ether of dihydric phenol which is to be made to react therewith are resorcinol, 2,2-bis(4-hydroxyphenyl)-propane, 4,4'-dihydroxybenzophenone, 1,1-bis(4-hydroxyphenyl)-methane, 1,1-bis(4-hydroxyphenyl)-ethane and 4,4'-dihydroxybiphenyl although the present invention is not limited thereto but a mixture thereof may be used as well.

A particularly preferred example is a diglycidyl ether of 2,2-bis(4-hydroxyphenyl)-propane, i.e. bisphenol A.

Examples of the amine which is to be made to react with the epoxy resin obtained by the reaction of the above-mentioned components are methylamine, ethylamine, n-propylamine, isopropylamine, monoethanolamine, n-propanolamine, isopropanolamine, diethylamine, diethanolamine, N-methylethanolamine, N-ethylethanolamine, ethylenediamine, diethylenetriamine, hydroxyethylaminoethylamine, ethylaminoethylamine, methylaminopropylamine and diethylaminopropylamine and a mixture thereof although the present invention is not limited thereto.

Alternatively, the primary amino group may be previously made to react with ketone and the resulting ketimine may be made to react with residual amine.

A particularly preferred example is alkanolamine having a hydroxyl group.

Basically, the reaction with an amine is conducted after the ligation of glycidyl ether of dihydric phenol with dicarboxylic acid but, if necessary, the epoxy group may be previously modified with an amine.

It is preferred that such a reaction is conducted in a system to which small amount of solvent, water or a mixture thereof is added. There is no particular limitation for the solvent so far as it does not react with an epoxy group.

In any of the reactions, reaction temperature is preferably 60-150°C.

The cationic amine-modified epoxy resin (A) of the present invention is obtained by cationization by means of neutralization of amino group of the above-prepared amine-modified epoxy resin by aid. Examples of the particularly preferred acid are formic acid, acetic acid, lactic acid, propionic acid, citric acid, malic acid and sulfamic acid.

It is preferred that the cationic amine-modified epoxy resin (A) of the present invention is used with blocked (poly)isocyanate known as a hardening resin in a weight ratio of 85∼40/15∼60 or, particularly preferably, 80∼55/20∼45.

Examples of the blocking agent are aliphatic alcohols such as methanol, ethanol, n-butanol and 2-ethylhexanol; Cellosolve compounds such as ethylene glycol monomethyl ether, ethylene glycol monobutyl ether and ethylene glycol monohexyl ether; oxime compounds such as acetoxime, methyl ethyl ketoxime and cyclohexanone oxime; and lactam compounds such as ε-caprolactam.

Examples of the (poly)isocyante are 2,4 or 2,6-tolylene diisocyanate and a mixture thereof, p-phenylene diisocyanate, diphenylmethane-4,4'-diisocyanate, polymethylene polyphenyl isocyanate, tetramethylene diisocyanate, hexamethylene diisocyanate, isophorone diisocyanate, cyclohexylmethane-4,4'-diisocyanate, m- or p-xylylene diisocyanate or the above-mentioned isocyanates which are modified by biuret or by isocyanurate although the present invention is not limited thereto but a mixture thereof may be used as well.

If necessary, common additives used for coatings may be added to the cationic electrodeposition coating of the present invention and their examples are coloring pigments such as titanium white, carbon black, red iron oxide and chrome yellow; body pigments such as talc, calcium carbonate, mica, clay and silica; rust-preventing pigments such as strontium chromate, zinc chromate, lead silicate, basic lead silicate, lead chromate, basic lead chromate, lead phosphate, red lead, lead cyanamide, lead zincate, lead sulfite, basic lead sulfate, aluminum phosphomolybdate and aluminum tripolyphosphate; antifoaming agents; anti-cratering agents; aqueous solvents; and curing catalysts.

The cationic electrodeposition coating composition of the present invention may be applied to a desired material surface by means of a known cationic electrodeposition coating means.

To be more specific, the solid concentration of the coating is adjusted preferably to 5-40% by weight or, more preferably, 15-25% by weight and pH is adjusted to 5-8 using the appropriate amount of acid whereby a coating can be conducted using a material to be applied as a cathode under the conditions of a bath temperature of 15-45°C and a loading voltage of 100-450 volts although the present invention is not limited to those conditions only.

The coated material is washed with water and baked in a baking furnace at the temperature of 100-220°C for 10-30 minutes to give cured coat. There is no particular limitation for thickness of the resulting coat although it is appropriate that the cured coat is 5-60 µm or, preferably, 10-40 µm .

### Examples

As hereunder, the present invention will be illustrated in more detail by means of Manufacturing Examples for the cationic amine-modified epoxy resin and by means of Examples, Comparative Examples and Test Examples for the coating containing said resin although the present invention is not limited thereto.

### Manufacturing Example 1.

Cationic amine-modified epoxy resin of the present invention was manufactured by the following method using the formulation as shown in Table 1.

**Table 1**

| Component Compounded | Compounding Amount |
|---|---|
| (1) Epoxy resin of bis A type (epoxy equivalent: 490) | 975.6 parts by wt. |
| (2) Succinic acid | 59.1 parts by wt. |
| (3) Tributylamine | 0.7 part by wt. |
| (4) Methyl isobutyl ketone | 181.9 parts by wt. |
| (5) Methyl isobutyl ketone | 297.7 parts by wt. |
| (6) Diethanolamine | 86.1 parts by wt. |
| Total | 1,601.1 parts by wt. |

The components (1), (2), (3) and (4) were successively charged into a two-liter four-necked flask equipped with stirrer, thermometer and condenser, stirred and heated and kept for about six hours after raising up to 125°C.

The resulting reaction product had a solid content of 85% and an acid value of almost nil. After that, cooling was started and, during the cooling stage, the component (5) was thrown thereinto for dilution and dissolution.

After cooling down to about 90°C, the component (6) was thrown thereinto and the mixture was raised up to about 110°C followed by keeping at that temperature for about three hours. As a result thereof, a cationic amine-modified epoxy resin (A-1) containing 0.7 milliequivalent(mEq)/g-solid of tertiary amino group was obtained. Solid content of this resin was 70%.

### Manufacturing Example 2.

For comparison, a cationic amine-modified epoxy resin was manufactured as follows. Thus, ESA-014 [epoxy resin of a bisphenol A type manufactured by Sumitomo Chemical (epoxy equivalent: 950)] (950 parts by weight) was dissolved in methyl isobutyl ketone (450 parts by weight), then diethanolamine (100 parts by weight) was thrown thereinto and the mixture was kept at 100°C for about two hours to give a cationic amine-modified epoxy resin (A-2) containing 0.91 mEq/g-solid of tertiary amino group. Solid content of this resin was 70%.

### Manufacturing Example 3.

A hardener resin (B-1) which will be commonly used both in Examples and in Comparative Examples was manufactured as follows. Thus, ε-caprolactam (113 parts by weight) was dissolved in methyl isobutyl ketone (108 parts by weight), then polymethylene polyphenyl isocyanate (140 parts by weight) was thrown thereinto and the mixture was kept at 100°C for about three hours. Solid content of the resulting resin was 70%.

### Manufacturing Example 4.

Resin for dispersing the pigment components to be added to the coating was manufactured by the following method using the formulation as shown in Table 2.

**Table 2**

| Component Compounded | Compounding Amount |
|---|---|
| (1) PP-300P (cf. footnote 1) | 182.0 parts by wt. |
| (2) Bisphenol A | 263.0 parts by wt. |
| (3) Tributylamine | 0.4 part by wt. |
| (4) Xylene | 29.0 parts by wt. |
| (5) Epoxy resin of bis A type (epoxy equivalent: 187) | 505.0 parts by wt. |
| (6) Ethylene glycol monobutyl ether | 417.0 parts by wt. |
| (7) Diethanolamine | 91.0 parts by wt. |
| Total | 1,487.4 parts by wt. |

| | |
|---|---|
| (footnote 1): Polyoxypropylene glycol ether manufactured by Sanyo Chemical Industries) | |

The components (1), (2), (3) and (4) were successively charged into a two-liter four-necked flask equipped with stirrer, thermometer and condenser, then raised up to 150°C with stirring and heating and kept at that temperature for about three hours. The resulting primary condensate contained about 94% of solid and the residual epoxy group therein was almost nil. Then, the component (5) was thrown thereinto and the mixture was heated up to 150°C and kept at that temperature for about two hours. Solid content and epoxy equivalent of the product were 97% and 950, respectively. After that, the component (6) was thrown thereinto followed by cooling down to about 80°C. The component (7) was then thrown thereinto and the mixture was heated up to 100 °C and kept at that temperature for about two hours. As a result thereof, a cationic amine-modified epoxy resin (A-3) containing 0.83 mEq/g-solid of tertiary amino group was obtained. Its solid content was 70%.

### Example 1 and Comparative Example 1.

Resins and solvents in a formulation as shown in Table 3 were charged in a two-liter four-necked flask equipped with stirrer, thermometer, condenser and vacuum device and then certain amount of the solvent was removed at about 90°C under the pressure of 50-60 mmHg. After that, the resin solution after removal of the solvent as mentioned above was thrown into a cylindrical container made of stainless steel in which deionized water and formic acid were charged to give an emulsion containing 35% of solid. Then predetermined amounts of deionized water and a pigment dispersion were added thereto to give an electrodeposition coating bath containing 20% of solid.

Incidentally, the pigment dispersion used hereinabove was prepared as follows. Thus, the above-mentioned cationic amine-modified epoxy resin (A-3) was used as a resin for dispersing the pigments while carbon black, titanium white, aluminum phosphomolybdate, aluminum silicate and curing catalyst were used as constituting components and they were subjected to dispersion using a pearl mill until the particle size as measured by a particle gauge became 10 µm or smaller to give a dispersion containing about 50% of solid.

### Test Example.

The electrodeposition coating bath manufactured in Example 1 or in Comparative Example 1 was placed in a container made of polyvinyl chloride and a test plate was prepared at the bath temperature of 28°C with stirring using the thing to be coated as a cathode under the such a condition that electrodeposition was conducted between cathode and anode (a counter electrode) whereupon a coat having a 20 µm thickness after baking was formed.
Thing to be coated: an SPCC plate as regulated by the JIS G 3141
Baking condition: 160°C for 10 minutes or 200°C for 20 minutes (in case of a spraying test with a saline solution only)

Quality of the resulting coat was evaluated according to a test method as mentioned below and the result is given in Table 3.

### Test Method

### Corrosion Resistance Test

A saline solution spraying test as regulated by the JIS Z 2371 was conducted.

In the test plate, cross cuttings arriving as deep as to the base material were applied to the coating, then a saline solution spraying test was conducted for 480 hours and the degree of formation of rust was evaluated. Evaluation of the coated thing was conducted for the cases where a treatment with zinc phosphate was done and also where that was not done.
○: good; △: fair; X: poor

### Shock Resistance Test

Du Pont impact tester was used and a falling distance (cm) using a weight of 1/2 inch and 1 kg was measured.

### Solvent Resistance Test

A rubbing test (ten times coming-and-going) was conducted using methyl isobutyl ketone.
○: good; △: fair; X: poor

**Table 3**

| | | Example 1 | Comp.Ex. 1 |
|---|---|---|---|
| | | | |

| Formulation of Electrodeposition Coating Bath (parts by weight) | | | |
|---|---|---|---|
| Resin Emulsion | | | |
| A-1 | | 564.8 | |
| A-2 | | | 564.8 |
| B-1 | | 306.0 | 306.0 |
| Propylene glycol monophenyl ether | | 98.9 | 98.9 |
| Amount of removed solvents | | -230.7 | -230.7 |
| Deionized water | | 991.8 | 991.8 |
| Formic acid | | 10.9 | 10.9 |
| Deionized Water | | 1,877.4 | 1,877.4 |
| Pigment Dispersion | | 380.9 | 380.9 |
| (Total) | | 4,000.0 | 4,000.0 |

| Quality of the Resulting Coat | | | |
|---|---|---|---|
| Corrosion-Resistance | | | |
| Untreated | 160°C for 10 min | ○ | △ |
| | 200°C for 20 min | ○ | X |
| Treated | 160°C for 10 min | ○ | ○ |
| | 200°C for 20 min | ○ | △ |
| Shock Resistance (cm) | | 35 | 30 |
| Solvent Resistance | | ○ | ○ |

When the cationic amine-modified epoxy resin of the present invention is used, excellent property and result are achieved in a lead-free coating system, particularly in terms of corrosion resistance on an untreated steel board, within a broad range of baking temperature level.

## Claims

1. A cationic electrodeposition coating composition containing a cationic amine-modified epoxy resin (A) obtained by cationizing an amine-modified epoxy resin prepared by the reaction of amine with an epoxy resin which is obtained by the reaction of at least one dicarboxylic acid having a molecular weight of 90-200 with at least one diglycidyl ether of dihydric phenol.

2. The cationic electrodeposition coating composition according to claim 1, wherein the diglycidyl ether of dihydric phenol is a diglycidyl ether of 2, 2-bis(4-hydroxyphenyl)-propane.

3. The cationic electrodeposition coating composition according to claim 1, wherein the amine is alkanolamine having a hydroxyl group.

4. The cationic electrodeposition coating composition according to any of claim 1-3, wherein the composition further contains blocked (poly)isocyanate in a weight ratio of 15∼60 / 85∼40 with regard to the cationic amine-modified epoxy resin (A).
